(19) Europäisches Patentamt
European Patent Office
Office européen des brevets

(11) **EP 2 103 463 B1**

(12) **EUROPÄISCHE PATENTSCHRIFT**

(45) Veröffentlichungstag und Bekanntmachung des Hinweises auf die Patenterteilung:
**16.05.2012   Patentblatt 2012/20**

(51) Int Cl.:
***B60H 1/00*** *(2006.01)*   ***F24F 13/14*** *(2006.01)*
***B60H 1/34*** *(2006.01)*

(21) Anmeldenummer: **09003151.9**

(22) Anmeldetag: **05.03.2009**

(54) **Stellvorrichtung für einen Luftausströmer**

Actuating device for an air outlet

Dispositif de réglage pour un diffuseur d'air

(84) Benannte Vertragsstaaten:
**DE FR GB**

(30) Priorität: **17.03.2008   DE 102008014377**

(43) Veröffentlichungstag der Anmeldung:
**23.09.2009   Patentblatt 2009/39**

(73) Patentinhaber: **Behr GmbH & Co. KG**
**70469 Stuttgart (DE)**

(72) Erfinder: **Röhm, Klaus**
**70736 Fellbach (DE)**

(74) Vertreter: **Grauel, Andreas et al**
**Grauel IP**
**Patentanwaltskanzlei**
**Presselstrasse 10**
**70191 Stuttgart (DE)**

(56) Entgegenhaltungen:
**EP-A- 1 721 766      WO-A-2008/018268**
**DE-A1- 10 244 280      DE-A1-102005 054 295**

EP 2 103 463 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Stellvorrichtung für einen Luftausströmer, insbesondere für eine Komfortdüse, gemäß dem Oberbegriff des Anspruches 1.

Um Luft einem Fahrzeuginnenraum zuzuführen, ist üblicherweise eine Mehrzahl von einzelnen Luftausströmern vorgesehen. So sind im Frontbereich eines Fahrzeuginnenraums üblicherweise Seiten- und Mitteldüsen sowie Defrost- und Fußraumdüsen angeordnet, welche als Komfortdüsen ausgebildet sein können. Derartige Komfortdüsen sind beispielsweise in der DE 10 2005 054 295 A1 beschrieben. Die Komfortdüsen weisen einen ersten Teilkanal für einen gerichteten Luftaustritt (Spotstrahl) sowie einen oder mehrere zweite Teilkanäle mit Leitschaufeln für einen diffusen Luftaustritt auf. Der Spotstrahl oder ein teilweise gerichteter Luftstrahl können durch eine Vorrichtung zur Einstellung der Richtung des austretenden Luftstroms, welche durch verschwenkbare Lamellen gebildet ist, nach oben oder unten (und/oder ggf. auch in seitlicher Richtung) gezielt in eine Richtung gelenkt werden.

Für die Einstellung der Richtung des austretenden Luftstroms ist üblicherweise ein Bedienelement benachbart der Komfortdüse in der Instrumententafel des Fahrzeugs angeordnet, welches durch ein Stellrad gebildet sein kann. Eine Belüftungsvorrichtung mit einem Stellrad ist in der DE 102 44 280 A1 beschrieben. Bei dieser Belüflungseinrichtung sind an einem einzigen Stellrad zwei Steuerkurven integriert. Das Stellrad kann im Verstellbereich an einer Radaußenseite, insbesondere in einem Funktionsbereich mit einem anderen Durchmesser als im Betätigungsbereich des Stellrads, mehrere Rastmulden aufweisen. Zur Fixierung einer Steilung des Stellrades steht ein federvorgespannter und ortsfest gehaltener Rastbolzen in Eingriff mit der der Stellung zugeordneten Rastmulde und beim Wechsel der Stellung ist durch das Verstellen des Stellrades der Rastbolzen überdrückbar und geht von einer Rastmulde in die nächste benachbarte Rastmulde über, so dass anhand der Rastmulden im Funktionsbereich genaue Positionen für das Stellrad vordefiniert sind, die jeweils bestimmten Verstellpositionen der Klappen bzw. Lamellen zugeordnet sind. Der Abstand zwischen den Rastmulden ist hierbei bevorzugt gleichmäßig.

Diese bekannten Stellvorrichtungen lassen jedoch noch Wünsche offen.

Es ist Aufgabe der Erfindung, eine verbesserte Stellvorrichtung zur Verfügung zu stellen.

Diese Aufgabe wird gelöst durch eine Stellvorrichtung mit den Merkmalen des Anspruches 1. Vorteilhafte Ausgestaltungen sind Gegenstand der Unteransprüche.

Die Erfindung betrifft eine Stellvorrichtung für einen Luftausströmer, insbesondere eine Komfortdüse, mit einstellbarem Luftaustritt, insbesondere einstellbarer Ausströmcharakteristik und/oder Strahlaufweitung, einem Bedienelement, welches durch ein von Hand betätigbares Stellrad gebildet ist, wobei das Stellrad mit einem Funktionsrad aufweisend eine Außenfläche verbunden ist. Das Stellrad ist mit dem Funktionsrad indirekt, beispielsweise über ein Zwischengetriebe oder direkt verbunden, insbesondere einstückig mit diesem ausgebildet. Das Stellrad und Funktionsrad sind zumindest innerhalb eines Verstellbereichs um eine Drehachse verdrehbar. Weiter ist ein Rastelement vorgesehen, das in Kontakt mit der Außenfläche des Funktionsrades ist. Bei der Stellvorrichtung ist einer Stellung des Funktionsrades eine bestimmte Luftausströmerstellung zugeordnet, wobei das Funktionsrad über einen Teil seines Umfangs eine durchgehend strukturierte Oberfläche aufweist, welche sich von dem Verlauf benachbarter Oberflächen unterscheidet, und die strukturierte Oberfläche sowie mindestens eine benachbarte Oberfläche mit dem Rastelement zusammenwirken.

Unter einer strukturierten Oberfläche wird hierbei eine Oberfläche verstanden, welche eine von den herstellungsbedingten Oberflächenrauhigkeiten einer zylinderförmigen Oberfläche abweichende, gezielt eingebrachte Struktur aufweist. Insbesondere wird hierunter nicht eine über den gesamten Umfang glatt polierte zylinderförmige Oberfläche verstanden. Besonders bevorzugt aber nicht notwendigerweise weist die strukturierte Oberfläche ein sich mehrfach innerhalb des strukturierten Bereichs wiederholendes 3-dimensionales Muster auf. Die strukturierte Oberfläche ist vorzugsweise durch eine geriffelte, gerändelte, fein gewellte, fein gezahnte, fein genutete Struktur gebildet.

Besonders bevorzugt verlaufen die Wellenberge-/täler oder Nuten parallel zur Drehachse des Stell- und Funktionsrades, d.h. bei einer Drehbewegung ergeben sich ausschließlich Belastungen des Rastelements in der Ebene senkrecht zur Drehachse und keine Querbelastungen.

Bevorzugt ist der Abstand zwischen einem Zylinder um die maximale Erhebung und einem koaxial hierzu angeordneten Zylinder innerhalb der minimalen Vertiefung der Struktur kleiner als oder gleich 3 mm. Diese Durchmesserveränderungen führen bei normalen Abmessungen von Stellrädern und entsprechend kleineren Außendurchmessern der hiermit verbundenen Funktionsräder zu leichten, haptisch erkennbaren Veränderungen des Kraftaufwands für ein Drehen des Stellrades, jedoch wird bei entsprechenden Abmessungen der mit dem Funktionsrad zusammenwirkenden Fläche des Rastelements ein Einrasten verhindert.

Vorzugsweise ist der Abstand zwischen zwei benachbarten Erhebungen oder zwei benachbarten Vertiefungen kleiner als oder gleich 3 mm, so dass es beim Drehen des Stellrades bei normalen Abmessungen von Stellrädem und entsprechend kleineren Außendurchmessern der hiermit verbundenen Funktionsräder in haptisch erkennbaren Frequenzen zu leichten Veränderungen des Kraftaufwands für ein Drehen des Stellrades kommt.

Auf der Außenfläche des Funktionsrades ist bevorzugt mindestens eine Rastnut ausgebildet, in welche das Rastelement eingreifen kann, wobei die Rastnut deutlich tiefer und breiter als die einzelnen Strukturen der strukturierten Oberfläche ausgebildet ist. Im Unterschied zu Nuten einer strukturierten Oberfläche wiederholt sich die Rastnut nicht oder - falls mehrere Rastnuten über das Funktionsrad verteilt angeordnet sind - die nächste Rastnut ist in einem Winkel von mindestens 20° oder 30° entfernt angeordnet.

Die Rastnut begrenzt bevorzugt mindestens einen Bereich mit strukturierter Oberfläche in Umfangsrichtung des Funktionsrades auf einer Seite.

Das Funktionsrad weist bevorzugt in einem Teil des Verstellbereichs, insbesondere zwischen zwei benachbarten Rastnuten, eine glatte, d.h. nicht strukturierte Oberfläche auf.

Das Rastelement weist bevorzugt eine gekrümmte Fläche, insbesondere eine einfach gekrümmte oder besonders bevorzugt eine kugelartig gekrümmte Fläche, auf, welche in Anlage an das Funktionsrad ist.

Insbesondere bevorzugt ist das Rastelement mittels einer Feder in radialer Richtung bezüglich der Drehachse des Funktionsrades mit seiner gekrümmten Fläche in Richtung Anlagefläche des Funktionsrades vorgespannt.

Bevorzugt ist das Rastelement selbst als Blattfeder ausgeführt.

Bei einer Stellvorrichtung für einen Luftausströmer mit einstellbarem Luftaustritt, einem Bedienelement, welches durch ein von Hand betätigbares Stellrad gebildet ist, das Stellrad mit einem Funktionsrad aufweisend eine Außenfläche verbunden oder einstückig ausgebildet ist, Stellrad und Funktionsrad zumindest innerhalb eines Verstellbereichs um eine Drehachse verdrehbar sind, und einem Rastelement, das in Kontakt mit der Außenfläche des Funktionsrades ist, ist einer Stellung des Funktionsrades eine bestimmte Luftausströmereinstellung zugeordnet. Hierbei weisen insbesondere bevorzugt mindestens drei Bereich der Außenfläche des Funktionsrades jeweils unterschiedliche geometrische Verläufe über den Umfang des Funktionsrades auf. Ein Bereich der drei Bereiche ist bevorzugt durch eine Rastnut gebildet. Alternativ oder in Verbindung mit einer Rastnut kann ein Bereich der drei Bereiche durch eine strukturierte Oberfläche gebildet sein, welche sich über einen Teil des Umfangs erstreckt. Insbesondere bevorzugt sind Rastnuten unterschiedlicher Form und beabstandet voneinander, insbesondere bevorzugt getrennt voneinander durch eine strukturierte Oberfläche, vorgesehen, um unterschiedliche Positionen des Stellrades hervorzuheben.

Über den Umfang des Funktionsrades ist einem ersten Übergang von einer ersten Oberfläche zu einer zweiten Oberfläche die Luftausströmer-Betriebsstellung "diffus", einem zweiten Übergang von der zweiten Oberfläche zu einer dritten Oberfläche die Luftausströmer-Betriebsstellung "spot + diffus", einem vierten Übergang von der dritten Oberfläche zu einer vierten Oberfläche die Luftausströmer-Betriebsstellung "spot", und einem fünften Übergang von der vierten Oberfläche zur ersten Oberfläche die Luftausströmer Betriebsstellung "geschlossen" zugeordnet, wobei sich die Verläufe der einzelnen Oberflächen voneinander unterscheiden und mindestens eine Oberfläche eine strukturierte Oberfläche ist, und/oder im Bereich eines oder mehrerer Übergänge zwischen zwei benachbarten Oberflächen eine Rastnut angeordnet ist. Sind mehrere Rastnuten vorgesehen, so unterscheiden sich bevorzugt auch die Verläufe derselben.

Bei dem Luftausströmer, für welchen eine derartige Stellvorrichtung verwendet wird, handelt es sich bevorzugt um eine Komfortdüse, wobei die Stellvorrichtung über die Stellung des Stellrades sowohl den Luftmassenstrom als auch die Art des Ausströmens (diffus/spot) regelt. Andere Anwendungen sind ebenfalls möglich.

Im Folgenden wird die Erfindung anhand von mehreren Ausführungsbeispielen, teilweise unter Bezugnahme auf die Zeichnung, im Einzelnen erläutert. Es zeigen:

Fig. 1 eine perspektivische Ansicht einer Komfortdüse mit Stell- vorrichtung gemäß dem ersten Ausführungsbeispiel,

Fig. 2 eine andere perspektivische Ansicht der Komfortdüse mit Stellvorrichtung von Fig. 1,

Fig. 3 eine schematisierte Ansicht des Funktionsrades samt Rastvorrichtung der Stellvorrichtung von Fig. 1,

Fig. 4 eine schematische Detailansicht Ansicht des Funktionsra- des samt Rastvorrichtung einer Stellvorrichtung gemäß einer ersten Variante des ersten Ausführungsbeispiels,

Fig. 5 eine schematische Darstellung eines Funktionsrades ge- mäß einem zweiten Ausführungsbeispiel, und

Fig. 6a-d schematische Darstellungen verschiedener strukturierter Oberflächen, wie sie beim ersten und beim zweiten Aus- führungsbeispiel verwendet werden können.

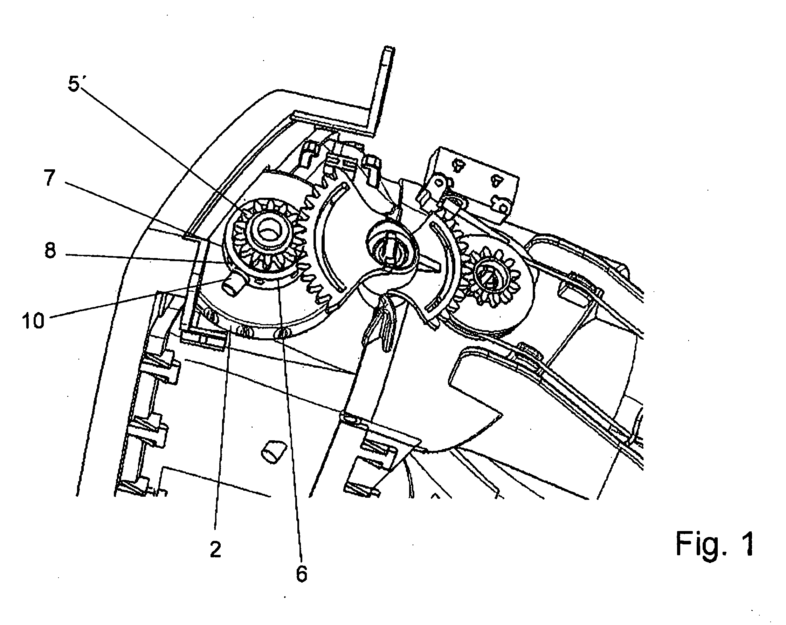

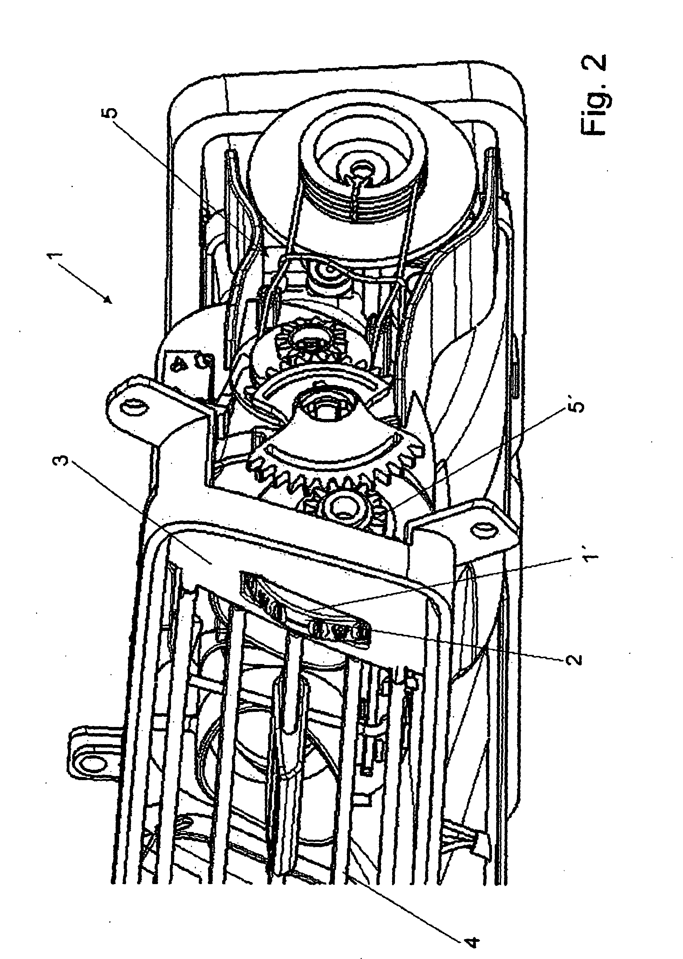

Im Frontbereich eines Kraftfahrzeug-Innenraums sind in die Instrumententafel integriert Luftausströmer angeordnet, wobei vorliegend eine fahrerseitige Seitendüse, eine fahrerseitige Mitteldüse, eine beifahrerseitige Mitteldüse und eine beifahrerseitige Seitendüse vorgesehen sind, die jeweils als sogenannte Komfortdüsen, welche in Abhängigkeit der Einstellung einen gerichteten Luftstrahl (Spotstrahl) oder ein diffuses Ausströmen der Luft ermöglichen, ausgebildet sind. Jede dieser Komfortdüsen weist eine Stellvorrichtung 1 auf, welche gemäß dem ersten Ausführungsbeispiel ausgebildet und unter Bezugnahme auf Figuren 1 bis 3 beschrieben ist.

Die Stellvorrichtung 1 weist als Bedienelement ein drehbar gelagertes Stellrad 2 auf, welches mit einem Teilbereich durch eine Blende 3 ragt, welche auch ein Lamellensystem 4, bestehend aus einer Mehrzahl parallel angeordneter und miteinander gekoppelter Lamellen zur Ablenkung eines austretenden Luftstrahls nach oben oder unten mit einem griffartigen Bedienelement zur Verstellung der Lamellen, aufweist. Zur einfacheren Betätigung und aus gestalterischen Gründen ist das Stellrad 2 an seiner gewölbten Außenfläche mit einer Struktur versehen, vorliegend einer Mehrzahl von Abflachungen. Ferner sind Symbole auf der Außenfläche angebracht, welche in Verbindung mit einer Markierung an der Blende die Einstellung der Komfortdüse anzeigen.

Die Stellvorrichtung 1 weist zur Übertragung der Stellbewegung vom Stellrad 2 an die einzelnen Klappen zur Regelung der Luftverteilung und des Luftmassenstroms (nicht dargestellt) eine Getriebeanordnung 5 mit einer Mehrzahl von Zahnrädern, Zahnsegmenten, Kurvenscheiben und anderen Übertragungselementen auf, wobei ein erstes Zahnrad 5' mit einem Außendurchmesser, der vorliegend deutlich kleiner als der Außendurchmesser des Bedienelements 1' ist, fest mit dem Stellrad 2 verbunden und koaxial zum Stellrad 2 angeordnet ist. Zwischen dem ersten Zahnrad 5' und dem Stellrad 2 ist koaxial zum Stellrad und Zahnrad und mit denselben drehsteif verbunden eine im Wesentlichen kreisförmige Scheibe angeordnet, welche im Folgenden als Funktionsrad 6 bezeichnet ist und auf welche im Folgenden näher eingegangen wird.

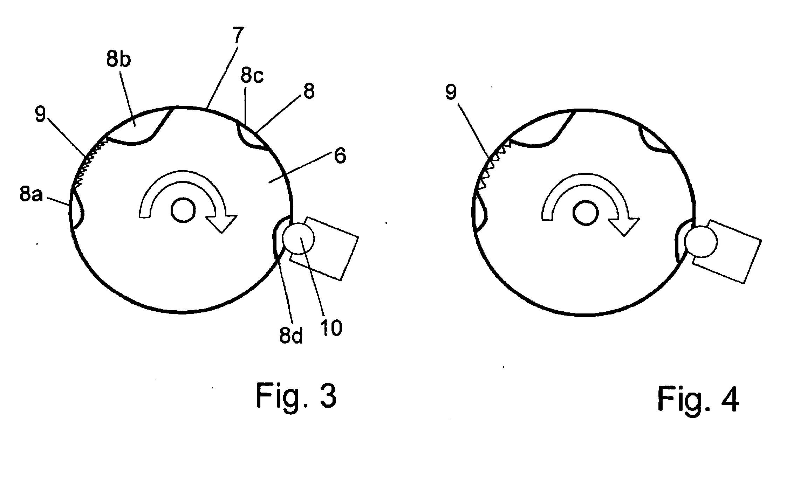

Das Funktionsrad 6 weist im Bereich seines Umfangs eine Außenfläche 7 auf, welche in einzelnen. Bereichen von der Zylinderform abweicht. So sind über den Umfang verteilt mehrere Rastnuten 8 vorgesehen, die vorliegend als napfförmige Vertiefungen ausgebildet sind und nur im mittleren Bereich der Außenfläche 7 angeordnet sind, wobei die jeweils größten Tiefen der einzelnen Rastnuten 8 in einem Querschnitt angeordnet sind (siehe Schnittdarstellung von Fig. 3).

Zwischen vorliegend zwei der Rastnuten 8 ist eine strukturierte Oberfläche 9 vorgesehen, wie in Fig. 3 angedeutet, wobei die strukturierte Oberfläche 9 durch eine Mehrzahl parallel zueinander und zur Drehachse des Funktionsrades 6 angeordneter sägezahnförmiger Nuten gebildet ist, welche eine deutlich geringere Tiefe aufweisen, als die benachbarten Rastnuten 8. In Anlage an die Außenfläche 7 ist ein Rastelement 10, welches vorliegend durch eine federbelastete Kugel gebildet ist, wie in Fig. 3 schematisch angedeutet. Der Durchmesser der Kugel ist kleiner als die Breite der Rastnuten 8 und deutlich größer als der Abstand zweier benachbarter sägezahnförmiger Nuten der strukturierten Oberfläche 9, so dass die Kugel mit dem tiefsten Punkt der Rastnuten 8 in Kontakt gelangen kann, auf was im Folgenden auch als "Einrasten" Bezug genommen wird, und die vom Benutzer durch Drehen des Stellrades 2 aufzuwendende Kraft, um die Kugel aus dieser Stellung zu entfernen, ist deutlich größer als die Kraft, die für eine Drehbewegung im übrigen Bereich des Funktionsrades 6 erforderlich ist.

Gelangt in Folge einer Drehbewegung des Funktionsrades 6 durch den Benutzer die Kugel in eine Rastnut 8, so wird durch das Einrasten das Weiterdrehen erschwert, wodurch der Benutzer spürt, dass eine bestimmte Position des Funktionsrades 6, welche einer bestimmten Einstellung der Komfortdüse entspricht, vorliegt. Vorliegend entsprechen die Positionen der Rastnuten 8 den Stellungen 100% Spotstrahl (Rastnut 8a), 50% Spotstrahl/50% diffuser Luftaustritt (Rastnut 8b), 100% diffuser Luftaustritt (Rastnut 8c) und kein Luftaustritt (Rastnut 8d). Wie aus Fig. 3 ersichtlich, ist die Rastnut 8b, welche der Mischstellung 50% Spotstrahl/50% diffuser Luftaustritt zugeordnet ist, tiefer als die anderen Rastnuten ausgebildet, so dass beim Verstellen das Erreichen dieser häufig gewünschten Stellung deutlich spürbar ist.

Durch die strukturierte Oberfläche 9 ergibt sich zudem ein Unterschied bei einer Verstellbewegung des Funktionsrades 6 in einem Bereich, in welchem die Kugel an der strukturierten Oberfläche 9 entlang bewegt wird, und einem Bereich, in welchem die Kugel an der glatten Außenfläche ohne Strukturierungen entlang bewegt wird. So wird die Kugel im strukturierten Bereich beim Entlangbewegen in radialer Richtung etwas hin und her bewegt, und der Kraftaufwand des Benutzers, um das Funktionsrad 6 zu drehen, ist in den Bereichen, in denen ein Überwinden der Federkraft erforderlich ist, um die Kugel aus dem Tal einer Nut zu bewegen, leicht erschwert, wobei durch die Sägezahnform zudem eine gewisse Richtungsabhängigkeit gegeben ist. Dahingegen ist eine Stellbewegung des Funktionsrades 6 im Bereich mit glatter Außenfläche mit einem im Wesentlichen gleichmäßigen Widerstand des Rastelements 10 verbunden.

Der Winkel zwischen zwei Zahnflanken benachbarter Zähne der strukturierten Oberfläche 9 beträgt vorliegend ca. 45°, die Zahnhöhe beträgt vorliegend ca. 1 mm. Hierbei verläuft eine Zahnflanke eines Zahns in radialer Richtung bezüglich der Drehachse des Funktionsrades 6.

Gemäß der in Fig. 4 dargestellten Variante des ersten Ausführungsbeispiels ist im Bereich der strukturierten Oberfläche 9 an Stelle einer Sägezahnform mit einer Zahnflanke in radialer Richtung eine Sägezahnform vorgesehen, bei welcher die Zähne dreieckförmig ausgebildet sind und spiegelbildlich zur Verbindung zwischen Zahnspitze und Drehachse des Funktionsrad angeordnete Zahnflanken aufweisen. Der Winkel zwischen zwei Zahnflanken benachbarter Zähne beträgt vorliegend ca. 75°. Die Zahnhöhe beträgt vorliegend ca. 1,5 mm.

Bevorzugte Winkel zwischen zwei Zahnflanken benachbarter Zähne betragen 10° bis 170°, insbesondere bevorzugt ist jedoch der Bereich ab 30° bis 120°- Die Zahnhöhen betragen bevorzugt 0,5 mm bis 3 mm.

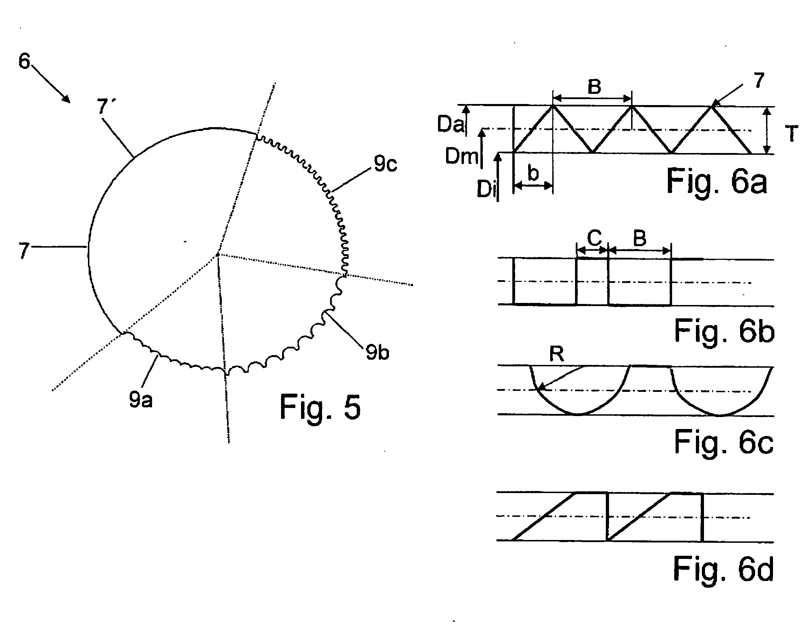

Fig. 5 zeigt ein Funktionsrad 6 gemäß dem zweiten Ausführungsbeispiel. Dieses Funktionsrad ist entsprechend dem Funktionsrad des ersten Ausführungsbeispiels direkt neben einem Stellrad angeordnet und fest mit demselben verbunden. Es unterscheidet sich jedoch dadurch vom Funktionsrad gemäß dem ersten Ausführungsbeispiel, dass keine Rastnuten vorgesehen sind, in welche die Rastvorrichtung einrasten kann. Vielmehr sind unterschiedlich strukturierte Oberflächen 9 (9a, 9b, 9c) über den Umfang der Außenfläche 7 des Funktionsrades 6 vorgesehen, sowie in einem Bereich eine ebene, nicht strukturierte Oberfläche 7', welche der Außenfläche 7 vor einbringung der Strukturierungen in den anderen Bereichen entspricht. Auch in diesem Fall sind einzelnen definierten Einstellungen der Komfortdüse bestimmte Stellungen des Funktionsrades 6 in Bezug auf eine Rastvorrichtung (nicht dargestellt) zugeordnet. Die Rastvorrichtung ist vorliegend durch einen im Bereich seiner Anlagefläche an das Funktionsrad 6 abgerundeten, federvorgespannten Stift gebildet, welcher in radialer Richtung bezüglich der Drehachse des Funktionsrades 6 angeordnet ist und an der Außenfläche des Funktionsrades 6 in Folge der Federvorspannung mit leichtem Druck anliegt.

Sämtliche strukturierte Oberflächen 9 sind vorliegend durch parallel zueinander und zur Drehachse des Funktionsrades 6 verlaufende, kreisförmig gekrümmte Nuten gebildet, wobei die Nuten der strukturierten Oberfläche 9a direkt ineinander übergehen, so dass zwischen zwei Nuten eine Art Zahn mit einer Spritze von einem 60°-Winkel ausgebildet ist. Der Radius der kreisförmig gekrümmten Nuten beträgt vorliegend 1 mm. Die benachbarte strukturierte Oberfläche 9b weist kreisförmige Nuten auf, die durch einen abgerundeten, zahnartigen Wandbereich voneinander getrennt sind. Die Nuten weisen in Bezug auf den Außenkreis um die abgerundeten Wandbereiche eine Tiefe von 2 mm auf. Der Krümmungsradius der Nuten beträgt 1,5 mm. Die dritte strukturierte Oberfläche 9c ist ebenfalls durch kreisförmig gekrümmte Nuten gebildet, die jedoch nach innen versetzt sind, so dass relativ hohe zahnartige Wandbereiche zwischen den einzelnen Nuten angeordnet sind. Der Krümmungsradius der Nuten beträgt vorliegend 0,5 mm, die Tiefe der Nuten in Bezug auf den Außenkreis um die Wandbereiche 1,5 mm. In allen Fällen entspricht der Außenkreis um die Wandbereiche zwischen den einzelnen Nuten bzw. die Zähne zwischen den Nuten der Außenfläche nicht strukturierten Oberfläche 7' und somit der Außenfläche 7 des Funktionsrades 6.

Vorliegend ist der Übergang der nicht strukturierten Oberfläche 7' zur ersten strukturierten Oberfläche 9a der geschlossenen Stellung der Komfortdüse zugeordnet. Der nachfolgende Übergang von der ersten strukturierten Oberfläche 9a zur zweiten strukturierten Oberfläche 9b ist der Komfortdüsenstellung "diffus" zugeordnet. Der nächste Übergang von der zweiten strukturierten Oberfläche 9b zur dritten strukturierten Oberfläche 9c ist der Mischstellung "spot + diffus" und der Übergang von der dritten strukturierten Oberfläche 9c zur nicht strukturierten Oberfläche 7' ist der Komfortdüsenstellung "spot" zugeordnet.

In Folge der Veränderung der Oberflächenstruktur, an welcher das Rastelement entlang bewegt wird, verändert sich während des Drehens der Widerstand und die Frequenz der durch die strukturierte Oberfläche 9 gegebenen Impulse, so dass haptisch erkannt werden kann, in welcher Position sich das mit dem Funktionsrad 6 drehsteif verbundene Stellrad etwa befindet, ohne dass die Markierungen am Stellrad hinzugezogen werden müssen.

Die Figuren 6a bis 6d zeigen beispielhaft Ausschnitte verschiedener strukturierter Oberflächen 9. Hierbei ist der Außendurchmesser, welcher dem Durchmesser entspricht, der von außen her an die höchste Erhebung anliegt, mit Da, der Innendurchmesser, welcher dem Durchmesser entspricht, der von innen an die tiefste Nut anliegt, mit Di und der mittlere Durchmesser mit Dm bezeichnet, wobei gilt:

$$Dm = (Da + Di)/2$$

Die Nuttiefe ist in den Figuren 6a bis 6d mit T, die äußere Nutbreite (bezogen auf ein gestrecktes Profil mit konstantem mittleren Umfang) mit B, der Abstand zwischen dem tiefsten Punkt der Nut und der Zahnspitze mit b, die Zahnbreite mit C und der Radius der Nut mit R bezeichnet. Hierbei sind bevorzugt folgende Abmessungen vorgesehen:

T: 0,5 mm bis 3 mm
B: 0,5 mm bis 3 mm
C: 0 mm bis 3 mm, insbesondere 0,5 mm bis 3 mm
R: 0,25 mm bis 3 mm, insbesondere 0, 5 mm bis 1,5 mm

Anstelle der dargestellten Profile sind insbesondere auch quadratische, rechteckförmige oder trapezförmige Nuten möglich.

Die einzelnen Nuten verlaufen bevorzugt parallel zur Drehachse des Funktions- bzw. Rändelrades, jedoch kann auch eine Anordnung in einem Winkel oder eine gekreuzte Anordnung der Nuten vorgesehen sein, wie beispielsweise bei einer gerändelten Oberfläche.

Gemäß einem dritten, nicht in der Zeichnung dargestellten Ausführungsbeispiel entfällt die strukturierte Oberfläche des ersten Ausführungsbeispiels, so dass über den ganzen Umfang des Funktionsrades eine glatte Oberfläche vorgesehen ist, welche durch unterschiedlich tiefe und breite Rastnuten, welche den Rastnuten des ersten Ausführungsbeispiels entsprechen, unterbrochen ist.

Gemäß einem weiteren, nicht in der Zeichnung dargestellten Ausführungsbeispiel ändert sich die Struktur der Oberfläche, welche ähnlich der strukturierten Oberfläche 9a von Fig. 5 ausgebildet ist, über den Umfang dahingehend, dass die Radien der Nuten kleiner werden und die Nuten ohne Verbreiterung des Zahns zusammenrücken, so dass sich bei einer Stellbewegung die erkennbare Frequenz der Eingriffe des Rastelements verändert und dadurch die Stellung des Stellrades haptisch erkennbar ist.

**Patentansprüche**

1. Stellvorrichtung für einen Luftausströmer mit einstellbarem Luftaustritt, insbesondere einstellbarer Ausströmcharakteristik, einem Bedienelement, welches durch ein von Hand betätigbares Stellrad (2) gebildet ist, wobei das Stellrad (2) mit einem Funktionsrad (6) das eine Außenfläche (7) hat verbunden oder einstückig mit diesem ausgebildet ist, wobei das Stellrad (2) und das Funktionsrad (6) zumindest innerhalb eines Verstellbereichs um eine gemeinsame Drehachse verdrehbar sind, und einem Rastelement (10), das in Kontakt mit der Außenfläche (7) des Funktionsrades (6) ist, bei der einer Stellung des Funktionsrades (6) eine bestimmte Luftausströmereinstellung zugeordnet ist, **dadurch gekennzeichnet, dass** das Funktionsrad (6) über einem Teil seines Umfangs eine durchgehend strukturierte Oberfläche (9) aufweist, welche sich von dem Verlauf benachbarter Oberflächen unterscheidet, und die strukturierte Oberfläche (9) sowie mindestens eine benachbarte Oberfläche mit dem Rastelement (10) zusammenwirken.

2. Stellvorrichtung nach Anspruch 1, **dadurch gekennzeichnet, dass** die strukturierte Oberfläche durch eine geriffelte, gerändelte, fein gewellte, fein gezahnte oder fein genutete Struktur gebildet ist.

3. Stellvorrichtung nach Anspruch 1 oder 2, **dadurch gekennzeichnet, dass** der Abstand zwischen einem Zylinder um die maximale Erhebung und einem koaxial hierzu angeordneten Zylinder innerhalb der minimalen Vertiefung der Struktur kleiner als oder gleich 3 mm ist.

4. Stellvorrichtung nach einem der vorhergehenden Ansprüche, **dadurch gekennzeichnet, dass** der Abstand zwischen zwei benachbarten Erhebungen oder zwei benachbarten Vertiefungen kleiner als oder gleich 3 mm ist.

5. Stellvorrichtung nach einem der vorhergehenden Ansprüche, **dadurch gekennzeichnet, dass** auf der Außenfläche (7) des Funktionsrades (6) mindestens eine Rastnut (8) ausgebildet ist, in welche das Rastelement (10) eingreifen kann, wobei die Rastnut (8) tiefer und breiter als die einzelnen Strukturen der strukturierten Oberfläche (9) ausgebildet ist.

6. Stellvorrichtung nach Anspruch 5, **dadurch gekennzeichnet, dass** die Rastnut (8) mindestens einen Bereich mit strukturierter Oberfläche (9) in Umfangsrichtung des Funktionsrades (6) begrenzt.

7. Stellvorrichtung nach einem der vorhergehenden Ansprüche, **dadurch gekennzeichnet, dass** das Funktionsrad (6) in einem Teil des Verstellbereichs, insbesondere zwischen zwei benachbarten Rastnuten (8), eine glatte Oberfläche aufweist.

8. Stellvorrichtung nach einem der vorhergehenden Ansprüche, **dadurch gekennzeichnet, dass** das Rastelement (10) eine gekrümmte Fläche, insbesondere eine einfach gekrümmte oder kugelartig gekrümmte Fläche, aufweist, welche in Anlage an das Funktionsrad (6) ist.

9. Stellvorrichtung nach Anspruch 8, **dadurch gekennzeichnet, dass** das Rastelement (10) mittels einer Feder in radialer Richtung bezüglich der Drehachse des Funktionsrades (6) mit seiner gekrümmten Fläche in Richtung Anlagefläche des Funktionsrades (6) vorgespannt ist.

10. Stellvorrichtung für einen Luftausströmer, insbesondere nach einem der vorhergehenden Ansprüche, mit einstellbarem Luftaustritt, insbesondere einstellbarer Ausströmcharakteristik, einem Bedienelement, welches durch ein von Hand betätigbares Stellrad (2) gebildet ist, wobei das Stellrad (2) mit einem Funktionsrad (6) das eine Außenfläche (7) hat verbunden oder einstückig mit diesem ausgebildet ist, wobei das Stellrad (2) und das Funktionsrad (6) zumindest innerhalb eines Verstellbereichs um eine gemeinsame Drehachse verdrehbar sind, und einem Rastelement (10), das in Kontakt mit der Außenfläche (7) des Funktionsrades (6) ist, bei der einer Stellung des Funktionsrades (6) eine bestimmte Luftausströmereinstellung zugeordnet ist, **dadurch gekennzeichnet, dass** mindestens drei benachbarte Bereich der Außenfläche des Funktionsrades (6) jeweils unterschiedliche geometrische Verläufe über den Umfang des Funktionsrades (6) aufweisen.

11. Stellvorrichtung nach Anspruch 10, **dadurch gekennzeichnet, dass** ein Bereich der drei Bereiche durch eine Rastnut (8) gebildet ist.

12. Stellvorrichtung nach Anspruch 10 oder 11, **dadurch gekennzeichnet, dass** ein Bereich der drei Bereiche durch eine nicht strukturierte Oberfläche (7') oder eine strukturierte Oberfläche (9) gebildet ist, welche sich über einen Teil des Umfangs erstreckt, und zwischen zwei Rastnuten (8) angeordnet ist, welche unterschiedliche Verläufe aufweisen.

**13.** Stellvorrichtung nach einem der vorhergehenden Ansprüche, **dadurch gekennzeichnet, dass** über den Umfang des Funktionsrades (6) einem ersten Übergang von einer ersten Oberfläche (9a) zu einer zweiten Oberfläche (9b) die Luftausströmer-Betriebsstellung "diffus", einem zweiten Übergang von der zweiten Oberfläche (9b) zu einer dritten Oberfläche (9c) die Luftausströmer-Betriebsstellung "spot + diffus", einem vierten Übergang von der dritten Oberfläche (9c) zu einer vierten Oberfläche (7') die Luftausströmer-Betriebsstellung "spot", und einem fünften Übergang von der vierten Oberfläche (7') zur ersten Oberfläche (9a) die Luftausströmer-Betriebsstellung "geschlossen" zugeordnet ist, wobei sich die Verläufe der einzelnen Oberflächen (7', 9a, 9b, 9c) voneinander unterscheiden und mindestens eine Oberfläche (9a, 9b, 9c) eine strukturierte Oberfläche (9) ist, und/oder im Bereich eines oder mehrerer Übergänge zwischen zwei benachbarten Oberflächen eine Rastnut (8) angeordnet ist.

**Claims**

**1.** An actuating device for an air outlet, comprising an adjustable air vent, in particular an adjustable outflow characteristic, a control element which is formed by a manually operable adjusting wheel (2), therein the adjusting wheel (2) is connected to a junction wheel (6) having an exterior surface (7) or is formed as one piece with the same, wherein the adjusting wheel (2) and the function wheel (6) can be rotated at least within an adjustment range about a common rotational axis, sand a locking element (10) which is in contract with the external surface (7) of the function wheel (6), wherein a position of the function wheel (6) is associated with a certain air outlet setting, **characterized in that** the function wheel (6), over a potion of its circumference, has a continuously structured surfaces (9) which differs from the characteristic of adjacent surfaces, and the structured surfaces (9) and at least one adjacent surface interact with the locking element (10).

**2.** The actuating device according to claim 1, **characterized in that** the structures surface is formed by a checkered, knurled, finely corrugated, finely toothed or finely grooved structure.

**3.** The actuating device according to claim 1 or claim 2, **characterized in that** the distance between a cylinder about the maximum projection and a cylinder arranged coaxially thereto within the minimum deepening of the structure is less or equal to 3 mm.

**4.** The actuating device according to any one of the preceding claims, **characterized in that** the distance between two adjacent projections or two adjacent deepening is less or equal to 3 mm.

**5.** The actuating device according to any one of the receding claims, **characterized in that** of the external surface (7) of the function wheel (6) at least one locking groove (8) is formed in which the locking element (10) can engage, wherein the locking groove (8) is deeper and wider than the individual structures of the structured surface (9).

**6.** The actuating device according to claim 5, **characterized in that** the locking groove (8) delimits in the circumferential direction of the function wheel (6) at least one region with a structures surface (9).

**7.** The actuating device according to any one of the preceding claim, **characterized in that** in a portion of the setting range, in particular between two adjacent locking grooves (8), the function wheel (6) has a smooth surface.

**8.** The actuating device according to any one of the preceding claim, **characterized in that** the locking element (10) has a curved surface, in particular a single-curved or spherically cursed surface which rests against the function wheel (6).

**9.** The actuating device according to claim 8, **characterized in that** the locking element (10) is pretensioned, by means of a spring, in the radial direction with regard to the rotational axis of the function wheel (6), with its curved surface toward the contact surface of the function wheel (6).

**10.** The actuating device for an air outlet, in particular according to any one of the preceding claims, comprising an adjustable air vent, in particular an adjustable outflow characteristic, a control element which is formed by a manually operable adjusting wheel (2), wherein the adjusting wheel (2) is connected to a function wheel (6) having an exterior surface (7) or is formed as one piece with the same, wherein the adjusting wheel (2) and the function wheel (6) can be rotated at least within an adjustment range about a common rotational axis, and a locking element (10) which is in contact with the external surface (7) of the function wheel (6), wherein a position of the function wheel (6) is associated with a certain air outlet settling, **characterized in that** at least three adjacent regions of the external surface of the function wheel (6) have in each case different geometrical characteristic over the circumference of the function wheel (6).

**11.** The actuating device according to claim 10, **characterized in that** one region of the three regions is formed by a locking groove (8).

**12.** The actuating device according to claim 10 or claim 11, **characterized in that** one region of the three regions is formed by a non-structured surface (7') or a structured surface (9) which extends over a portion of the circumference and is arranged between two locking grooves (8) which have different characteristics.

**13.** The actuating device according to any one of the preceding claims, **characterized in that** over the circumference of the function wheel (6), a first transition from a first surface (9a) to a second surface (9b) is associated with the air outlet operating position "diffuse", a second transition from the second surface (9b) to a third surface (9c) is associated with the air outlet operating position "spot + diffuser", a fourth transition from the third surface (9c) to a fourth surface (7') is associated with the air outlet operating position "spot", and a fifth transition from the fourth surface (7') to the first surface (9a) is associated with the air outlet operating position "closet", wherein the characteristic of the individual surfaces (7', 9a, 9b, 9c) differ from each other and at least one surface is a structured surfaces (9), and/or a locking groove (8) is arranged in the legion of one or a plurality of transition between two adjacent surfaces.

**Revendications**

**1.** Dispositif de réglage pour une diffuseur d'air comprenant une sortie d'air réglable, en particulier ayant une caractéristique d'écoulement réglable, un élément de commande qui est formé par une molette de réglage (2) pouvant être actionnée manuellement, où la molette de régalage (2), comportant une molette fonctionnelle (6) qui a une surface extérieure (7), est configurés en étant assemblée avec cette molette fonctionnelle ou bien en formant une seule et même pièce avec celle-ci, où la molette de réglage (2) et la molette fonctionnelle (6) sont déplacées en rotation autour d'un axe de rotation commun, au moins à l'intérieur d'une zone de réglage, et comprenant un indexeur (10) qui est en contact avec la surface extérieure (7) de la molette fonctionnelle (6), dispositif de réglage dans lequel un réglage déterminé d'un diffuseur d'air est associé à une position de la molette fonctionnelle (6), **caractérisé en ce que** la molette fonctionnelle (6) présente, sur une partie de sa circonférence, une surface (9) structurée de façon continue, surface qui se différencie du profil de surfaces voisines, et la surface structurée (9) ainsi qu'au moins une surface voisine coopèrent avec l'indexeur (10).

**2.** Dispositif de réglage selon la revendication 1, **caractérisé en ce que** la surface structurée est formée par une structure cannelée, moletée, finement ondulée, finement dentée ou finement rainurée.

**3.** Dispositif de réglage selon la revendication 1 ou 2, **caractérisé en ce que** la distance entre un cylindre placé autour de la partie saillante maximale et un cylindre disposé de façon coaxiale par rapport à celui-ci est inférieure ou égale à 3 mm à l'intérieur de la cavité minimale de la structure.

**4.** Dispositif de réglage selon l'une quelconque des revendications précédentes, **caractérisé en ce que** la distance entre deux parties saillants voisines ou entre deux cavités voisines est inférieure ou égale à 3 mm.

**5.** Dispositif de réglage selon l'une quelconque des revendications précédentes, **caractérisé en ce qu'**au moins une rainure d'indexation (8) est configurée sur la surface extérieure (7) de la molette fonctionnelle (6), rainure d'indexation dans laquelle peut s'engager l'indexeur (10), ou la rainure d'indexation (8) est configurée en étant plus profonde et plus large que les différentes structures de la surface structurée (9).

**6.** Dispositif de réglage selon la revendication 5, **caractérisé en ce que** la rainure d'indexation (8) délimite, dans la direction circonférentielle de la molette fonctionnelle (6), au moins une zone comportant une surface structurée (9).

**7.** Dispositif de réglage selon l'une quelconque des revendications précédentes, **caractérisé en ce que** la molette fonctionnelle (6) présente une surface lisse dans une partie de la zone de réglage, en particulier entre deux rainures d'indexation (8) voisines.

**8.** Dispositif de réglage selon l'une quelconque des revendications précédentes, **caractérisé en ce que** l'indexeur (10) présente une surface courbe, en particulier une surface simplement courbée ou courbée de maçon sphérique, laquelle surface est en appui sur la molette fonctionnelle (6).

**9.** Dispositif de réglage selon la revendication 8, **caractérisé en ce que** l'indexeur (10) est précontraint au moyen d'un ressort, dans le sens radial par rapport à l'axe de rotation de la molette fonctionnelle (6), l'indexeur ayant sa surface courbe en direction de la surface d'appui de la molette fonctionnelle (6).

**10.** Dispositif de réglage pour un diffuser d'air, en particulier selon l'une quelconque des revendications précédentes, comprenait une sortie d'air réglable, en particulier ayant une caractéristique d'écroulement réglable, un élément de commande qui est formé par une molette de réglage (2) pouvant être actionnée manuellement, où la molette de réglage (2), comportant une molette fonctionnelle (6) qui a une surface extérieure (7), est configurée en étant assemblée avec cette molette fonctionnelle ou bien en formant une seule et même pièce avec celle-ci, ou la molette de réglage (2) et la molette fonctionnelle (6) sont déplacées en notation auteur d'un saxe de rotation commun, au moins à l'intérieur dune zoné de réglage, et comprenant un indexeur (10) qui est en contant avec la surface extérieure (7) de la molette fonctionnelle (6), dispositif de réglage dans lequel un réglage déterminé d'un diffuseur d'air est associé à une position de la molette fonctionnelle (6), **caractérisé en ce qu'**au moins trois zones voisines de la surface extérieure de la molette fonctionnels; (6) présentent à chaque fois des profils géométriques différents, sur la circonférence de la molette fonctionnelle (6).

11. Dispositif de réglage selon la revendication 10, **caractérisé** sen ce que l'une des trois zones est formée par une rainure d'indexation (8).

12. Dispositif de réglage selon la revendication 10 ou 11, **caractérisé en ce que** l'une des trois zones est formée par une surface (7') non structurée ou bien par une surface structurée (9) qui s'étend sur une partie de la circonférence et est disposée entre deux rainurés d'indexation (8) qui présentant des profils différents.

13. Dispositif de réglage selon l'une quelconque des revendications précédentes, **caractérisé en ce que**, sur la circonférence de la molette fonctionnelle (6), la position de fonctionnement du diffuseur d'air en mode "diffus" est associée à un premier passage se produisant d'une première surface (9a) à une deuxième surface (9b), la position de fonctionnement du diffuseur d'air en mode "jet directionnel + diffas" est associée à un deuxième passage se produisant de la deuxième surface (9b) à une troisième surface (9c), la positron de fonctionnement du diffuseur d'air en mode "jet directionnel" est associée à un quatrième passage se produisent de la troisième surface (9c) à une quatrième surface (7'), et la position de fonctionnement du diffuseur d'air sen mode "fermé" est associée à un cinquième passage se produisait de la quatrième surface (7') à la première surface (9a), où les profiles des différentes surfaces (7', 9a, 9b, 9c) se différencient les unes des autres, et au moins une surface (9a, 9b, 9c) est une surface structurée (9), et / ou une rainure d'indexation (8) est disposée dans la zone d'un ou de plusieurs passages se produisant entre deux surfaces voisinés.

Fig. 1

Fig. 2

Fig. 3

Fig. 4

Fig. 5

Fig. 6a

Fig. 6b

Fig. 6c

Fig. 6d

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005054295 A1
- DE 10244280 A1